# EUROPÄISCHE PATENTANMELDUNG

(11) **EP 4 782 802 A1**
(43) Veröffentlichungstag der Anmeldung: **29.07.2026**
(21) Anmeldenummer: 25222303.7
(22) Anmeldetag: 10.12.2025
(51) Int. Cl.: G01J 5/02, G01J 5/04, G01K 1/16, G01K 1/14

(54) **RAUMTEMPERATURFÜHLER ZUR ERFASSUNG VON WÄRMESTRAHLUNG IN EINEM INNENRAUM BEI DER TEMPERATURREGELUNG EINER HEIZUNGS- ODER KLIMAANLAGE**

(30) Priorität: 21.01.2025 DE 102025102020
(71) Anmelder: Rühl, Christian, 74177 Bad Friedrichshall (DE)
(72) Erfinder: Rühl, Christian, 74177 Bad Friedrichshall (DE)
(74) Vertreter: Gleim Petri Patent- und Rechtsanwaltspartnerschaft mbB

(57) **Zusammenfassung**

Ein Raumtemperaturfühler (1) zur Erfassung von Wärmestrahlung in einem Innenraum bei der Temperaturregelung einer Heizungs- oder Klimaanlage, umfassend eine Montageplatte (2) zur Befestigung an einer Unterputzgerätedose (10); ein auf einer Anschlussplatte (3) angeordnetes Temperatursensorelement (4) zur Erfassung von Wärmestrahlung; und eine Abdeckplatte (5) aus einem wärmeleitenden Material, wobei die Abdeckplatte (5) eine Größe und Form hat, um im montierten Zustand die Anschlussplatte (3) und die in der Unterputzgerätedose (10) befestigte Montageplatte (2) vollständig zu überdecken.

## Beschreibung

Die Erfindung betrifft einen Raumtemperaturfühler zur Erfassung von Wärmestrahlung in einem Innenraum bei der Temperaturregelung einer Heizungs- oder Klimaanlage, der an einer Innenwand anordenbar ist.

Das technische Gebiet betrifft Temperaturregelungen und insbesondere Temperaturfühler, die unmittelbar oder mittelbar dazu verwendet werden den Istwert der Temperatur eines Raumes zu erfassen und ein Signal zur Rückkopplung für eine Heizung oder Klimaanlage bereitzustellen.

Bei Raumtemperaturfühlern zur Erfassung von Wärmestrahlung wird die Temperatur nicht über die konvektiv durch das Gehäuse strömende Luft, sondern direkt die an am Sensor ankommende Wärmestrahlung ermittelt. Der Temperaturfühler umfasst dazu zum Beispiel einen IR-Temperatursensor, der ein elektrisches Signal als Maß für die Temperatur liefert. Temperaturerfassung mittels Raumstrahlungsfühlern messen die Strahlungswärme, was insofern vorteilhaft ist, dass eine sehr konstante Messung für die Regelung der Heizung oder Klimaanlage sichergestellt ist.

Bei Aufputzgehäusen, die auf der Oberfläche einer Wand befestigt sind, sind Öffnungen vorhanden, durch die die zirkulierende Luft zum Temperatursensor gelangt. Die Positionierung an der Wand ist wichtig, weil jeder Raum eine spezifische Temperaturdynamik hat, die durch die jeweilige Luftzirkulation bestimmt wird. Die Temperaturdynamik ist dabei von Gegenständen und Hindernissen beeinflusst. Deshalb sollte der Fühler fern von Gegenständen oder Hindernissen installiert werden, die Luftbewegungen abschirmen und es sollten unkontrollierte Luftströmungen (Zugluft) zum Beispiel durch eine Montage in Tür- oder Fensternähe vermieden werden.

Die Aufputzmontage ist nachteilig, insofern die Einsatzmöglichkeiten beschränkt sind. Zum Beispiel in forensischen Einrichtungen, Psychiatrien, psychosomatische Einrichtungen, Justizvollzugsanstalten, Strafanstalten, Gefängnissen, Räume zur Sicherheitsverwahrung, Arrestzellen oder besonders-Gesicherte Räume (BGR - ähnlich Kriseninterventionszelle) dürfen keine demontierbaren oder mit bloßen Händen zerstörbaren Gehäuse verwendet werden. Ferner sind Aufputzmontagen nachteilig in Räumen, die zur Tierzucht und Tierhaltung verwendet werden aufgrund von Verschmutzung oder der mechanischen Zerstörung durch die Tiere.

Es ist die Aufgabe der Erfindung einen Raumtemperaturfühler zur Erfassung von Wärmestrahlung bereitzustellen, bei dem die aus dem Stand der Technik bekannten Nachteile überwunden werden und das insbesondere für viele Einsatzmöglichkeiten verwendet werden kann.

Die Erfindung umfasst einen Raumtemperaturfühler zur Erfassung von Wärmestrahlung in einem Innenraum bei der Temperaturregelung einer Heizungs- oder Klimaanlage. Der Raumtemperaturfühler umfasst eine Montageplatte zur Befestigung an einer Unterputzgerätedose; ein auf einer Anschlussplatte angeordnetes Temperatursensorelement zur Erfassung von Wärmestrahlung; eine Abdeckplatte aus einem wärmeleitenden Material, wobei die Abdeckplatte eine Größe und Form hat, um im montierten Zustand die (auf der Montageplatte befestigte) Anschlussplatte und die in der Unterputzgerätedose befestigte Montageplatte (vorne und seitlich) vollständig zu überdecken. Aufgrund der vollflächig geschlossenen Abdeckplatte, die die übrigen Bauteile zum Innenraum hin komplett umschließt, wird eine abgeschlossene Einheit geschaffen, die keinen Eingriff hat, um mit bloßen Händen diese zu Öffnen oder mechanisch zu zerstören. Die Abdeckplatte hat keine Öffnungen und ist fest mit den anderen Bauteilen verschraubt.

Gemäß einem vorteilhaften Aspekt ist die Abdeckplatte im montierten Zustand mit dem Temperatursensorelement über ein Wärmeleitplättchen unmittelbar (in Kontakt) angeordnet. Aufgrund des Kontakts zwischen Abdeckplatte und Temperatursensorelement kann die über die Abdeckplatte vom Raum aufgenommene Wärmestrahlung mit dieser in Wärmekontakt stehenden Temperatursensorelement direkt erfasst werden, um eine zuverlässige Messung zur gewährleisten.

Bevorzugt ist die Abdeckplatte im montierten Zustand mit dem Temperatursensorelement über ein Wärmeleitplättchen ohne Abstand in unmittelbaren Kontakt (innerhalb der Sensornut) angeordnet. Das Wärmeleitplättchen ist aus einem Material mit im Vergleich zur Abdeckplatte (sowie zur Luft) niedrigerer Wärmeleitfähigkeit und verbessert die Übertragung der Wärme von der Abdeckplatte auf das Temperatursensorelement.

Bevorzugt ist die Abdeckplatte aus Aluminium. Die Aluminiumabdeckplatte hat neben guten Wärmeleiteigenschaften auch eine hohe Robustheit.

Ferner bevorzugt umfasst die Abdeckplatte eine Sensornut, einen Flächenabschnitt mit erhöhter Rauigkeit und/oder einen mit einem strahlungsabsorbierenden Lack beschichteten Flächenabschnitt. Damit kann die Aufnahme der Wärmestrahlung des Temperatursensorelements verbessert werden.

Besonders vorteilhaft hat die Abdeckplatte eine seitlich umlaufende Kante. Die seitlich umlaufende Kante hat eine Breite, die größer ist als die (gemeinsame) Dicke der Anschlussplatte und der Montageplatte. Bevorzugt umfasst der Raumtemperaturfühler ferner eine Dichtung mit einer Größe und Form entsprechend der seitlich umlaufenden Kante. Die Dichtung liegt im montierten Zustand zwischen der Abdeckplatte und der Wand an. Dadurch wir das Eindringen von Luft verhindert und die Platte wird thermisch von der Wand entkoppelt, so dass die Messung der Wärmestrahlung von weniger Störfaktoren beeinflusst wird.

Ferner vorteilhaft umfasst die Anschlussplatte eine mechanische Anschlussvorrichtung für das Temperatursensorelement. So lässt sich zum Beispiel ein Platin-Chip-Temperatursensor in verschiedenen Genauigkeitsklassen und Sensorarten je nach Anwendung einsetzen.

Vorteilhafterweise umfasst die Montageplatte Gewindeelemente zur Verschraubung an der Abdeckplatte angeordneten Schrauben. In einem Beispiel sind das Vierkantmuttern, die ins Kunststoffbauteil eingelassen sind, um ein Herausziehen während der Montage zu verhindern. Dazu kann eine Gewindeschraube (Ausführung mit Sicherheitsschraube durch Standardgewinde möglich, bspw. Torx mit Pin, Snake-Eye) eingesetzt werden. Für eine höhere IP-Schutzart ist eine Unterlegscheibe aus Gummi zwischen Schraube und Abdeckplatte einsetzbar.

Gemäß einem weiteren vorteilhaften Aspekt umfasst der Raumtemperaturfühler eine Dämmplatte aus einem wärmeisolierenden Material, wie Kork. Die Dämmplatte hat eine Größe und Form, um das Temperatursensorelement (sowie die Montage- und Anschlussplatte) abzuschirmen. Die wärmeisolierende Platte aus Kork dient zur Abschirmung von rückseitigem Fremdwärmeeintrag.

Dabei ist es besonders bevorzugt, dass die Dämmplatte (und/oder die Anschlussplatte) einen Lötpin-Schlitz zum Anschluss des Temperatursensorelements umfasst. So ist eine standardisierte Montage gewährleistet.

Im Folgenden werden die Erfindung sowie vorteilhafte Ausführungsformen derselben anhand der in den Zeichnungen dargestellten Beispiel näher beschrieben und erläutert.

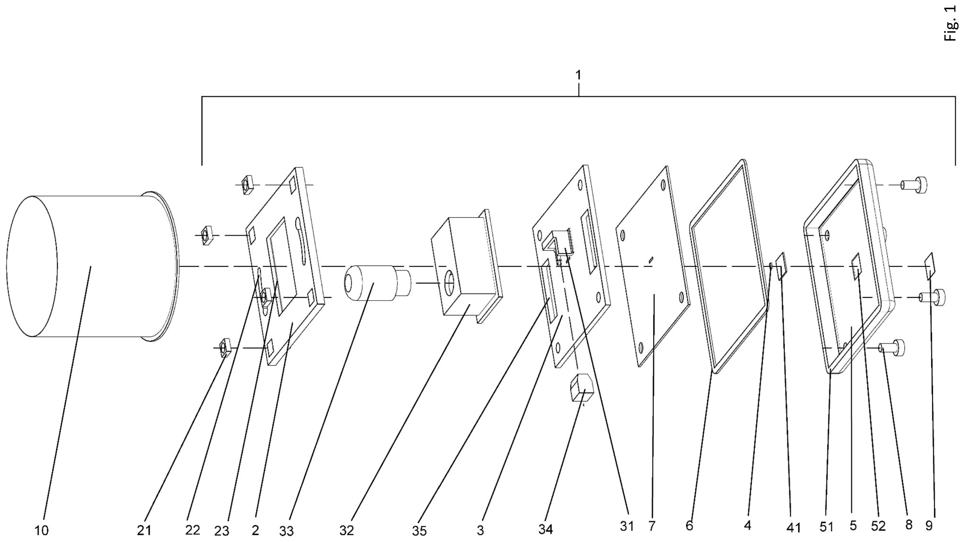

Es zeigt
Fig. 1 ein erfindungsgemäßer Raumtemperaturfühler zur Erfassung von Wärmestrahlung bei der Temperaturregelung einer Heizungs- oder Klimaanlage.

**Fig. 1** ist ein erfindungsgemäßer Raumtemperaturfühler 1 zur Erfassung von Wärmestrahlung bei der Temperaturregelung einer Heizungs- oder Klimaanlage.

Der Raumtemperaturfühler 1 hat eine Montageplatte 2 zur Befestigung an einer Unterputzgerätedose 10. Bei der Unterputzgerätedose 10 handelt es sich zum Beispiel um eine universelle Gerätedose (Unterputz und Hohlwand) mit Standardmaß genormt auf d=68mm (Beton oder Trockenbau). Der bauseitige Kabelzug durch diese Gerätedose 10 zum Anschlusspin 34 hin ist nicht dargestellt. Die Montageplatte 2 hat Gewindemuttern, die in diesem Beispiel als Vierkantmutter M4 konstruktiv in das Bauteil eingelassen sind. Die Montageplatte dient zur Befestigung an der Unterputzgerätedose 10.

Der Raumtemperaturfühler 1 hat ein (auf einer Anschlussplatte 3) zwischen der Korkplatte 7 und der Wärmeleitplatte 41 angeordnetes Temperatursensorelement 4 zur Erfassung von Wärmestrahlung. Das kann zum Beispiel ein Platin-Chip-Temperatursensor (verschiedene Genauigkeitsklassen und Sensorarten je nach Anwendung) sein. Auf der Anschlussplatte 3 ist ein Gehäuse 32 angeordnet zur Abdeckung von Sensorik und Anschlüssen.

Die umlaufende Kante von Gehäuse 32 versinkt in einer Nut 23 auf der Montageplatte 2 um die Zugentlastung 33 (im Beispiel in als M12 Kabelverschraubung) zu ermöglichen und einen flachen Aufbau zu gewährleisten. Bauteil 32 ragt in die bauseitige Gerätedose hinein.

Der Raumtemperaturfühler 1 umfasst ferner eine Dämmplatte 7 zwischen der Anschlussplatte 3 und der Abdeckplatte 5 aus einem wärmeisolierenden Material, wie Kork. Die Dämmplatte 7 hat eine der Anschlussplatte 3 entsprechende Größe und Form, um das Temperatursensorelement 4 vor störender Wärmeleitung bzw. Konvektioon (rückseitigem Wärmeeintrag) abzuschirmen. Im gezeigten Beispiel hat die Dämmplatte 7 und die Anschlussplatte 3 einen Lötpin-Schlitz zum Anschluss des Temperatursensorelements 4 durch die Dämmplatte 7 und die Anschlussplatte 3 hindurch.

Der Raumtemperaturfühler 1 umfasst erfindungsgemäß eine Abdeckplatte 5 aus einem wärmeleitenden Material, wie zum Beispiel Aluminium. Die Abdeckplatte 5 hat eine Größe und Form, um im montierten Zustand die Anschlussplatte 3 und die in der Unterputzgerätedose 10 befestigte Montageplatte 2 seitlich vollständig zu überdecken. Die Abdeckplatte 5 umfasst eine seitlich umlaufende Kante 51, die eine Breite hat, die größer ist als die Dicke der Anschlussplatte 3 und der Montageplatte2, um diese abzudecken. Die Schrauben 8 befestigen die Abdeckplatte 5 mit der Montageplatte 2 und damit auch alle Bauteile dazwischen.

Im gezeigten Beispiel ist eine Dichtung 6 mit einer Größe und Form entsprechend der seitlich umlaufenden Kante 51 vorhanden. Die Dichtung 6 ist bevorzugt ein Schaumgummi zur umseitig schließenden Befestigung der Gesamtkonstruktion. Dazu kommt die Dichtung bei der Montage zwischen Wand und umlaufender Kante 51 zur Anlage. Dadurch werden Störeinflüsse wie Konvektion aus der Luft und Wärmeleitung von der Wand auf die Abdeckplatte 5 verringert. Weiter können damit Wandunebenheiten ausgeglichen werden, wie beispielsweise von Rauputz oder Fliesenfugen.

Im montierten Zustand ist die Abdeckplatte 5 mit dem Temperatursensorelement 4 über ein Wärmeleitplättchen 41 unmittelbar in Kontakt. Bevorzugt umfasst die Abdeckplatte 5 eine Sensornut, einen Flächenabschnitt 52 mit erhöhter Rauigkeit 9 und/oder einen mit einem strahlungsabsorbierenden Lack beschichteten Flächenabschnitt 52.

Die Anschlussplatte 3 enthält rückseitig eine mechanische Anschlussvorrichtung für eine Pinhalterung für den Pin 34. Die Pinhalterung ist auf der Anschlussplatte 3 befestigt. An dem Pin 34 werden bei der Montage die bauseitigen Kabel im 2- Leiter oder 4-Leiter Messverfahren angeschlossen.

Weiter enthalten Montageplatte 2 und Anschlussplatte 3 eine Nut zur Aufnahme der Schraubbefestigung der Gerätedose 10. Auf der Montageplatte 2 sind dazu entsprechend Aufnahmen 22 vorgesehen, um den Temperaturfühler bei schiefer Gerätedosen-Lage dennoch gerade ausrichten zu können. Auf der Anschlussplatte 3 sind die Nuten 35 so groß, dass die Schraubenköpfe der Gerätedöse nicht die wandbündige Montage beeinträchtigen.

Je nach Anforderung kann die Aluminiumoberfläche mit weiteren Schutzlacken behandelt werden. Es ist dabei darauf zu achten, dass der Flächenabschnitt 9 im Sinne der Temperaturerfassung nicht wesentlich nicht nachteilig beeinflusst wird (bspw. Glätten der Rauigkeit)

## Patentansprüche

1. Raumtemperaturfühler (1) zur Erfassung von Wärmestrahlung in einem Innenraum bei der Temperaturregelung einer Heizungs- oder Klimaanlage, umfassend
- eine Montageplatte (2) zur Befestigung an einer Unterputzgerätedose (10);
- ein auf einer Anschlussplatte (3) angeordnetes Temperatursensorelement (4) zur Erfassung von Wärmestrahlung; und
- eine Abdeckplatte (5) aus einem wärmeleitenden Material, wobei die Abdeckplatte (5) eine Größe und Form hat, um im montierten Zustand die Anschlussplatte (3) und die in der Unterputzgerätedose (10) befestigte Montageplatte (2) vollständig zu überdecken.

2. Raumtemperaturfühler (1) nach Anspruch 1, wobei die Abdeckplatte (5) im montierten Zustand mit dem Temperatursensorelement (4) über ein Wärmeleitplättchen (41) unmittelbar angeordnet ist.

3. Raumtemperaturfühler (1) nach Anspruch 1 oder 2, wobei die Abdeckplatte (5) im montierten Zustand mit dem Temperatursensorelement (4) über ein Wärmeleitplättchen (41) ohne Abstand in unmittelbaren Kontakt angeordnet ist.

4. Raumtemperaturfühler (1) nach einem der Ansprüche 1 bis 3, wobei die Abdeckplatte (5) aus Aluminium ist.

5. Raumtemperaturfühler (1) nach einem der vorangehenden Ansprüche, wobei die Abdeckplatte (5) eine Sensornut (52), einen Flächenabschnitt (9) mit erhöhter Rauigkeit (9) und/oder einen mit einem strahlungsabsorbierenden Lack beschichteten Flächenabschnitt (9) umfasst.

6. Raumtemperaturfühler (1) nach einem der vorangehenden Ansprüche, wobei die Abdeckplatte (5) eine seitlich umlaufende Kante (51) umfasst, und wobei die seitlich umlaufende Kante (51) eine Breite hat, die größer ist als die Dicke der Anschlussplatte (3) und der Montageplatte (2).

7. Raumtemperaturfühler (1) nach einem der vorangehenden Ansprüche, ferner umfassend eine Dichtung (6) mit einer Größe und Form entsprechend der seitlich umlaufenden Kante (51).

8. Raumtemperaturfühler (1) nach einem der vorangehenden Ansprüche, wobei die Anschlussplatte (3) eine mechanische Anschlussvorrichtung für das Temperatursensorelement (4) umfasst.

9. Raumtemperaturfühler (1) nach einem der vorangehenden Ansprüche, wobei die Montageplatte (2) Gewindeelemente (21) zur Verschraubung an der Abdeckplatte (5) angeordneten Schrauben (8) umfasst.

10. Raumtemperaturfühler (1) nach einem der vorangehenden Ansprüche, ferner umfassend eine Dämmplatte (7) aus einem wärmeisolierenden Material, wie Kork, wobei die Dämmplatte (7) eine Größe und Form hat, um das Temperatursensorelement (4) abzuschirmen.

11. Raumtemperaturfühler (1) nach einem der vorangehenden Ansprüche, wobei die Dämmplatte (7) und die Anschlussplatte (3) einen Lötpin-Schlitz zum Anschluss des Temperatursensorelements (4) umfasst.
